Europäisches Patentamt

European Patent Office

Office européen des brevets

(19)

(11) **EP 0 379 354 B1**

(12) **EUROPEAN PATENT SPECIFICATION**

(45) Date of publication and mention
of the grant of the patent:
**01.05.1996 Bulletin 1996/18**

(51) Int Cl.⁶: **H04N 7/14**

(21) Application number: **90300485.1**

(22) Date of filing: **17.01.1990**

(54) **Picture communication apparatus**

Bildübertragungsvorrichtung

Appareil de communication d'images

(84) Designated Contracting States:
**DE FR GB**

(30) Priority: **20.01.1989 JP 12388/89**

(43) Date of publication of application:
**25.07.1990 Bulletin 1990/30**

(73) Proprietors:
• **SONY CORPORATION
Tokyo (JP)**
• **The Tokyo Electric Power Co., Inc.
Chiyoda-ku Tokyo (JP)**
• **Kabushiki Kaisha Meidensha
Shinagawa-ku Tokyo 141 (JP)**
• **Ascii Corporation
Minato-ku Tokyo (JP)**

(72) Inventors:
• **Suzuki, Toshio
Shinagawa-ku, Tokyo (JP)**
• **Sahara, Hiroshi
Shinagawa-ku, Tokyo (JP)**
• **Tonomura, Masashi
Shinagawa-ku, Tokyo (JP)**
• **Murata, Yoshihiro
Shinagawa-ku, Tokyo (JP)**
• **Fujisaki, Naoki
Shinagawa-ku, Tokyo (JP)**
• **Hattori, Seiji, c/o The Tokyo Electric
Chiyoda-ku, Tokyo (JP)**

• **Kimura, Hiroshige, c/o The Tokyo Electric
Chiyoda-ku, Tokyo (JP)**
• **Baba, Hiroyuki, c/o The Tokyo Electric
Chiyoda-ku, Tokyo (JP)**
• **Shimizu, Hideo, c/o The Tokyo Electric
Chiyoda-ku, Tokyo (JP)**
• **Watanabe, Takamoto, c/o The Tokyo Electric
Chiyoda-ku, Tokyo (JP)**
• **Miyajima, Naoto
Shinagawa-ku, Tokyo (JP)**
• **Fujii, Hisao
Minato-ku, Tokyo (JP)**
• **Mishima, Jun
Minato-ku, Tokyo (JP)**
• **Miyoshi, Nagayasu
Minato-ku, Tokyo (JP)**

(74) Representative: **Ayers, Martyn Lewis Stanley et al
J.A. KEMP & CO.
14 South Square
Gray's Inn
London WC1R 5LX (GB)**

(56) References cited:
EP-A- 0 321 084   GB-A- 2 193 023
US-A- 3 617 630   US-A- 4 430 526
US-A- 4 686 698   US-A- 4 794 634

• **FUNKSCHAU no. 7, 27 March 1987, MUNICH, DE
pages 44 - 47; 'Videokonferenz- Studios:
Massgeschneidert'**

## Description

PICTURE COMMUNICATION APPARATUS

This invention relates generally to picture communication apparatus and, more particularly, is directed to a picture communication apparatus having tablet means and capable of transmitting line drawing data generated by the tablet means together with video signals.

A picture communication apparatus has been proposed which transmits a picture of the user together with an audio signal through, for example, an exclusive digital network line.

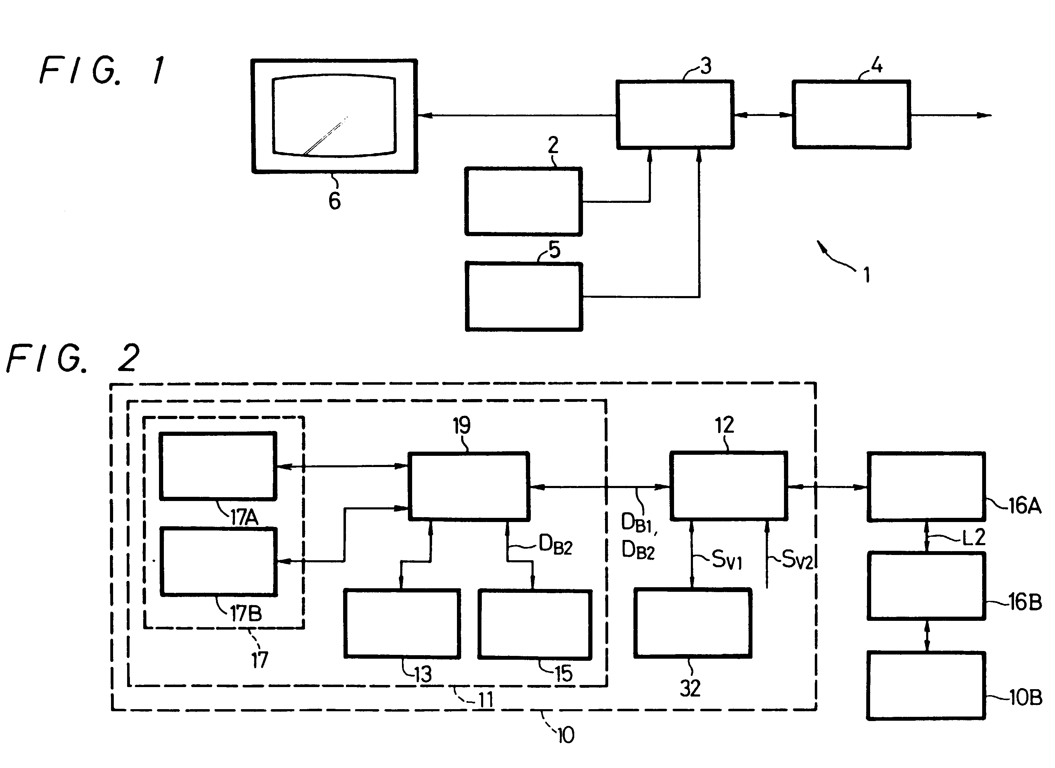

Figure 1 of the accompanying drawings shows an example of such previously proposed picture communication apparatus.

In use of the picture communication apparatus 1, a picture of the user is taken by a camera apparatus 2 to produce a video signal. This video signal is supplied through a control circuit 3 to a data compressing and expanding circuit 4, in which it is compressed and is then transmitted to a transmission object (not shown). Alternatively, a picture of a document selected by the user is taken by a camera apparatus 5 and this picture is transmitted instead of the picture of the user. During reception, a video signal sent from the transmission object is expanded and converted to a video signal. This video signal converted is then displayed on a predetermined display apparatus 6. Therefore, users can communicate with each other as though they had met while they were discussing drawings or the like.

Further, if the picture communication apparatus is combined with a telewriting apparatus so that line drawing inputted by, for example, a user terminal apparatus is independently transmitted to a communication object, it becomes possible for the users to exchange their views while discussing drawings and the like between distant communication objects.

Document US-A-4,430,526 describes a graphics transmission system for use in teleconferencing. A camera is used to transmit a full image of a graphic. If changes are then made using a special pen, these are detected and only they are transmitted. However, this means a minimum of two sets of transmission data and this graphics data is not included with the other teleconferencing data.

It is also known from document 3,617,630 to broadcast graphics superimposed on a dynamic image in television. This is done by filming both images and mixing them. It would be, however, of limited use in teleconferencing.

In the above described picture communication apparatus, if a line drawing were inputted to the document picked-up and line drawing data were transmitted, the picture communication apparatus could be utilised more effectively.

Accordingly, it is an object of the present invention to provide an improved picture communication apparatus capable of transmitting line drawing data together with video signals generated by cameras.

It is another object of the present invention to provide an improved picture communication apparatus which reduces or eliminates the drawbacks encountered with the prior art apparatus.

According to the present invention, there is provided a two-way communication system including first and second communication terminals, and picture communication means at each terminal for providing users with visual images of each other, said picture communication means comprising:

a) camera means for generating video signals to be transmitted;
b) display means for displaying the visual images;
c) control means for controlling transmission and reception of said video signals; and
d) line drawing input means connected to said control means for generating a line signal representing a line drawing for transmitting from said control means;

wherein said line drawing input means includes tablet means on which a user can draw lines, coordinate data detecting means for detecting coordinates corresponding to drawn lines, and output means for outputting coordinate data to said control means; characterised
by further comprising means at each terminal for connection to and communication via a two-way telephone service; in that
said line drawing input means includes coordinates converting means for converting absolute coordinate data, detected by said coordinate data detecting means, to relative coordinate data for supply to said output means; in that
said output means comprises parallel-to-serial converting means for outputting serial coordinate data to said control means; and in that
said line signal is transmitted from said control signal with said video signal.

The invention will be further described by way of non-limitative example with reference to the accompanying drawings, in which:-

Figure 1 is a block diagram of a prior art picture communication terminal used in a two-way communication system;
Figure 2 is a block diagram of a two-way communication system according to an embodiment of this invention;
Figure 3 is a plan view of a keyboard of the apparatus of figure 2;
Figure 4 is a pictorial representation to which reference will be made in explaining the connection between display means and tablet means;

Figure 5 is a block diagram of tablet means used in the apparatus of figure 2;

Figure 6 is a block diagram of display means used in the apparatus of figure 2;

Figure 7 is a block diagram of another example of tablet means used in the apparatus of figure 2;

Figure 8 is a block diagram of the two-way communication system according to another embodiment of this invention;

Figure 9 is a flow chart to which reference will be made in explaining the operation of tablet means of the apparatus of figure 8;

Figures 10 and 11 are schematic diagrams for explaining the operation of the apparatus of figure 8;

Figure 12 is a schematic diagram for explaining the operation of coordinates conversion of the tablet means of figure 5;

Figure 13 is a flow chart to which reference will be made in explaining the operation of tablet means of figure 5;

Figure 14 is a block diagram of the two-way communication system according to a further embodiment of this invention;

Figure 15 is a schematic diagram for explaining the operation of display means of apparatus of figure 14; and

Figure 16 is a block diagram of picture compression means of figure 14.

Referring to the drawings in detail, and initially to figure 2, it will be seen that a picture communication apparatus 10 comprises a user terminal apparatus 11 and a control apparatus 12 which may be located separately from each other.

In the user terminal apparatus 11, a keyboard apparatus 13 necessary to the picture communication apparatus 10, a tablet input display apparatus 15 and a camera apparatus 17 are connected to the control apparatus 12 through a display apparatus 19, whereby the connection between the keyboard apparatus 13, the tablet input display apparatus 15, the camera apparatus 17, the display apparatus 19 and the control apparatus 12 can be simplified. Therefore, the operator or user can set the picture communication apparatus with ease only by connecting the user terminal apparatus 11, placed on the user's desk top, to the control apparatus 12.

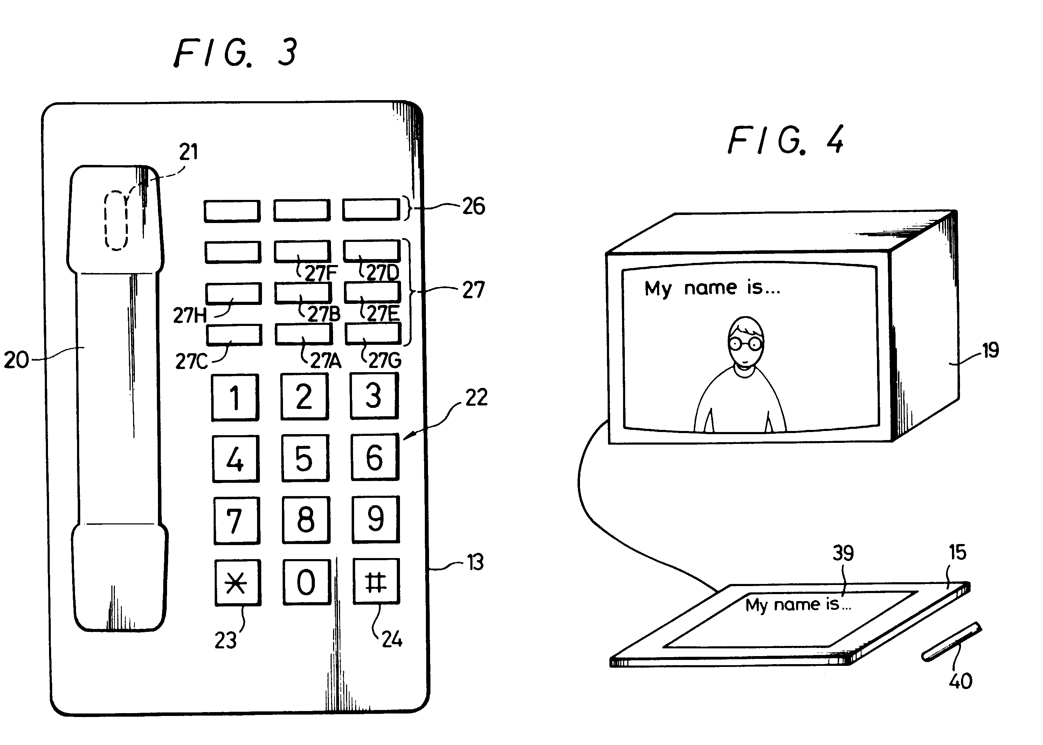

As shown in figure 3, the keyboard apparatus 13 is provided with a handset 20, an ON-hook switch 21, a dial keypad 22 having dial keys "0" to "9", a "*" key 23, a "#" key 24, a key 26 for abbreviated dialing, reserve and so on, a mode switching key 27. These keys are sequentially scanned at a predetermined cycle, so that it becomes possible to detect the ON-state of each key.

Further, when respective keys of the keyboard apparatus 13 are turned ON, the keyboard apparatus 13 supplies key codes assigned to the respective keys to the control apparatus 12, thereby effecting a communication between the picture communication apparatus and a desired transmission object.

The control apparatus 12 is adapted to detect the key code derived from the keyboard apparatus 13. On the basis of the detected key code, the control apparatus 12 changes the operation mode of the picture communication apparatus 10 in response to the ON state of each of the keys 21 to 26.

More specifically, the control apparatus 12 controls, when two mode change-over keys 27A (television signal receiving mode) and 27B (video tape recorder reproducing mode) are each operated, the picture communication apparatus 10 so that the picture communication apparatus 10 is set in the local mode.

When the mode change-over key 27A for the television signal receiving mode is turned ON at that event, the control apparatus 12 responds to operation of the keys of the dial keypad 22 and the "#" key 24 to change a receiving channel of a receiving apparatus 32 connected thereto. A video signal $S_{V1}$ and an audio signal delivered from the receiving apparatus 32 are supplied through the control apparatus 12 to the display apparatus 19.

Thus, when the keys of the dial keypad 22 and the key 24 are sequentially operated in the order of "1", "0" and "#", the receiving channel is changed to the channel 10, thereby receiving a television signal of the channel 10. Accordingly, the dial keys of the dial keypad 22 for communication serve as keys for switching the channel, thereby simplifying the arrangement of the keyboard apparatus 13.

When, on the other hand, the mode changeover key 27B for the video tape recorder reproducing mode is turned ON, a video signal $S_{V2}$ and an audio signal from a video tape recorder (not shown) connected to the control apparatus 12 are supplied through the control apparatus 12 to the display apparatus 19, whereby the picture communication apparatus 10 can be utilised as a monitor apparatus for the video tape recorder. Therefore, the picture communication apparatus 10 can be utilised as a television receiver and as a monitor apparatus, which enables the user to utilise the picture communication apparatus 10 more effectively.

When a key 27C of the mode changeover key 27 for the picture communication mode is turned ON, the control apparatus 12 controls the picture communication apparatus 10 so that the picture communication apparatus 10 is set in the picture communication mode. Then, the control apparatus 12 detects the states of the keys 22 to 24 and supplies a command to a data compressing and expanding apparatus 16A, thereby effecting the circuit connection processing. Thus, the picture communication apparatus 10 is connected through an exclusive digital network line L2 to a picture communication apparatus 10B of a desired transmission object.

In the control apparatus 12, if the ON-hook switch 21 is turned OFF instead of the picture communication mode key 27C, the picture communication apparatus 10 is placed in the picture communication mode similarly, and the picture communication apparatus 10 is connected to the digital network line L2.

When a picture pick-up key 27D of the mode changeover key 27 is turned ON, a picture, set by the user, is taken by a video camera apparatus 17A, and the control apparatus 12 is supplied with the resultant video signal from the display apparatus 19.

The control apparatus 12 supplied the video signal to the succeeding data compressing and expanding apparatus 16A together with an audio signal from the handset 20. In the data compressing and expanding apparatus 16, these video and audio signals are converted to digital signals. The compressed digital video and audio signals are transmitted to the transmission object.

The input digital signal supplied through the exclusive digital network line L2 is expanded in data by the data compressing and expanding apparatus 16A, and is thereby

converted to video and audio signals. The thus converted video and audio signals are supplied to the tablet input display apparatus 15. Therefore, the user can communicate with the operator of the picture communication apparatus 10B which is a communication object and connected to the picture communication apparatus 10 via, for example, the exclusive digital network line L2, while discussing a picture.

When a key 27E of the mode changeover key 27 is turned ON, the control apparatus 12 controls the camera apparatus 17 so that the document camera apparatus 17A is changed-over to a portrait camera apparatus 17B, whereby an object to be picked-up by the camera apparatus 17 is changed from the document to the operator who is seated in front of the display apparatus 19. Therefore, instead of the video signal representing the document, the video signal representing the operator is inputted to the control apparatus 12 via the display apparatus 19. This video signal is converted to the digital signal together with the audio signal, and compressed in data and is fed to the transmission object.

Accordingly, in the above described operation mode, the display apparatus 19 and the picture communication apparatus 10B, provided as the transmission object, can display the pictures of the operators to each other, whereby the operators can communicate with each other as though they met each other.

Further, when a still picture mode key 27F of the key 27 is turned ON, the video signal from the display apparatus 19 is supplied to the control apparatus 12 at the timing in which the key 27F is turned ON. This video signal is converted to a digital signal of a predetermined format by the data compressing and expanding apparatus 16A, and is transmitted together with the audio signal. Therefore, the picture of the document or portrait, picked-up by the camera apparatus 17, is converted to a still picture, whereby an image having high resolution can be transmitted.

When a cursor key 27G of the key 27 is turned ON, then the picture communication apparatus 10 is set in the telewriting mode, whereby the video and audio signals and line drawing data $D_{B2}$ from the tablet input display apparatus 15 are transmitted to the transmission object.

Further, the control apparatus 12 receives the video signal, the audio signal and picture drawing data $D_{B1}$ from the communication object and then supplies these video signal, audio signal and picture drawing data $D_{B1}$ to the display apparatus 19 and the tablet input display apparatus 15.

In that event, when a superimpose key 27H of the key 27 is turned ON, the control apparatus 12 supplies a control signal to the display apparatus 19 so that the display condition on the display apparatus 19 is changed-over to the superimpose display as shown in figure 4.

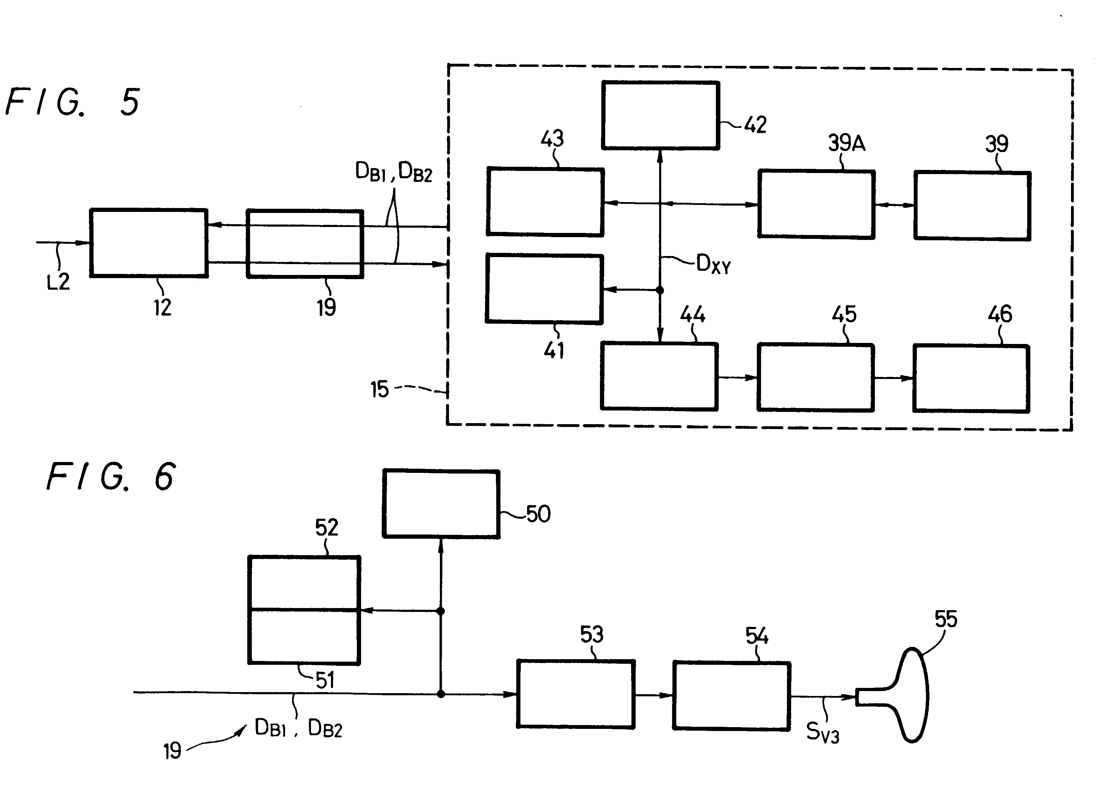

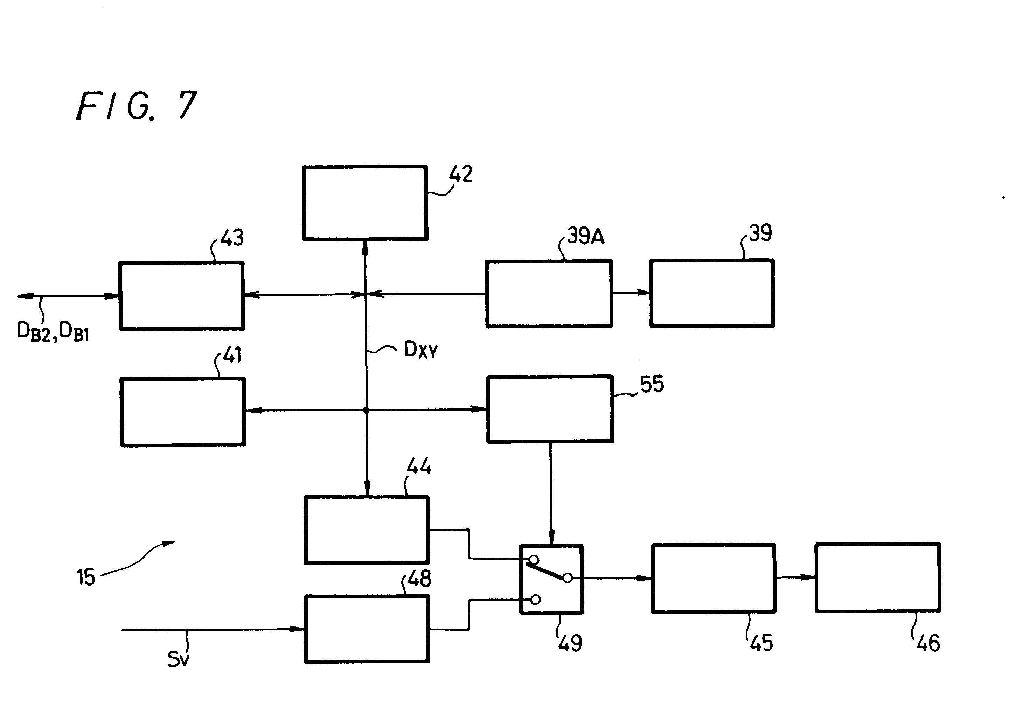

Referring to figure 5, the tablet input display apparatus 15 utilise a liquid crystal display apparatus 46 to display line drawing, and electrodes bonded to the rear surface of the liquid crystal display apparatus 46 forms a tablet 39.

Further, in the telewriting mode, the tablet input display apparatus 15 displays input menu data such as straight line, circle, hand-written data and the like on the display screen of the liquid crystal display apparatus 46. When the operator depresses the predetermined menu on the display screen of the liquid crystal display apparatus 46 with a stylus 40 (see figure 4), the tablet input display apparatus 15 is placed in a predetermined input mode.

More specifically, in the tablet input display apparatus 15, the tablet 39 is divided to provide 640 and 480 incremental areas in the horizontal and vertical directions. When the incremental areas of the tablet 39 are scanned by an xy coordinate data detecting circuit 39A at a predetermined cycle, positional information of the incremental area, depressed by the stylus 40, is detected on the basis of xy coordinate data $D_{XY}$ which are defined in respect of the tablet 39 with reference to a predetermined original point O.

Further, in the tablet input display apparatus 15, the input xy coordinate data $D_{XY}$ is processed by a central processing unit (CPU) 42 in accordance with a processing program stored in a read only memory (ROM) 41, whereby the input mode is changed to a predetermined line drawing input mode.

In this state, when the input mode is changed to, for example, a straight line input mode, menu data (formed o colour of display and width of line, etc) selected on the display screen of the liquid crystal display apparatus 46 by the operator is processed similarly as described above. Then, coordinate data concerning an input straight line is obtained from coordinate data of the incremental area depressed next by the stylus 40, thereby forming the picture drawing data $D_{B2}$.

In other words, the coordinate data $D_{XY}$ of the incremental area depressed by the stylus 40, is sequentially obtained from the xy coordinate data detecting circuit 39A in accordance with the processing program stored in the read only memory 41, thereby detecting coordinate data $D_{XY}$ representing the starting portion and ending portion of the straight line.

Line drawing data expressing a straight line (data expressing the kinds of line drawings), control data expressing the width of straight line and control data expressing the display colour are added to the coordinate data $D_{XY}$ representing the starting point and the ending point of the straight line, thus forming line drawing data $D_{B2}$ set. This line drawing data $D_{B2}$ set is what might be called a picture description instruction (PDI) set.

In the tablet input display apparatus 15, the line drawing data $D_{B2}$ is converted in the form of parallel to serial data by a parallel-to-serial converting circuit 43. The thus converted serial line drawing data $D_{B2}$ is supplied through the display apparatus 19 to the control apparatus 12 on the basis of, for example, RS-232C set by regulations of the Federal Communications Commission. Simultaneously, display data stored in a video memory circuit 44 is updated on the basis of the line drawing data $D_{B2}$.

In an input mode of, for example, hand-written data, xy coordinate data $D_{XY}$ are sequentially obtained for the points of the locus of movement of the stylus 40 during the detection cycle of the xy coordinate data detecting circuit 39A. The straight picture drawing data $D_{B2}$ connecting the above mentioned points is obtained on the basis of the coordinate data $D_{XY}$.

Accordingly, in this case, the picture drawing data $D_{B2}$ is sequentially outputted, and on the basis of the picture drawing data $D_{B2}$, the display image of the scanning locus is formed after the locus scanned by the stylus 40. Thus, display data in the video memory 44 is sequentially read out at the timing of the raster-scanning by the display circuit 45, and on the basis of the display data, the line picture is displayed on the liquid crystal display apparatus 46 located on the tablet, whereby in the hand-written data input mode, the display circuit 45 displays the line drawing in accordance with the scanning locus of the stylus 40. In this embodiment, the tablet input display apparatus 15 forms line drawing input means which inputs line drawing data.

Further, the picture drawing data $D_{B1}$ of transmission object, outputted from the control apparatus 12, is supplied to the tablet input display apparatus 15. The tablet input display apparatus 15 processes the picture drawing data $D_{B1}$ similarly to the picture drawing data $D_{B2}$, thereby displaying line drawing, expressed by the picture drawing data $D_{B1}$, together with the line drawing expressed by the line drawing data $D_{B2}$. Therefore, the tablet input display apparatus 15 can display the line drawing and the same line drawing is simultaneously displayed in the transmission object. Thus, it is possible to realise a telewriting function where the operator and the other party write pictures each other on a sheet of paper. Therefore, the picture communication apparatus can be utilised more effectively.

As described above, the CPU 42 outputs the picture drawing data $D_{B2}$ itself to the control circuit 12 in accordance with RS-232C so that the control circuit 12 need not convert the xy coordinate data $D_{XY}$ into the picture drawing data, thus making it possible to more effectively avoid the speed of processing of, for example, the video signal being reduced. Thus, the picture communication apparatus of the present invention can be utilised more effectively.

Referring back to figure 2, the display apparatus 19 is adapted to display the video signal which is outputted from the control apparatus 12 in response to the mode switching operation of the control apparatus 12. More specifically, in the local mode and in the television communication mode, the display apparatus 19 displays the video signal derived from the control apparatus 12, whereas in the telewriting mode, the display apparatus 19 forms display images in response to the picture drawing data $D_{B1}$ and $D_{B2}$ inputted thereto from the control apparatus 12 and the tablet input display apparatus 15, and displays the visual images.

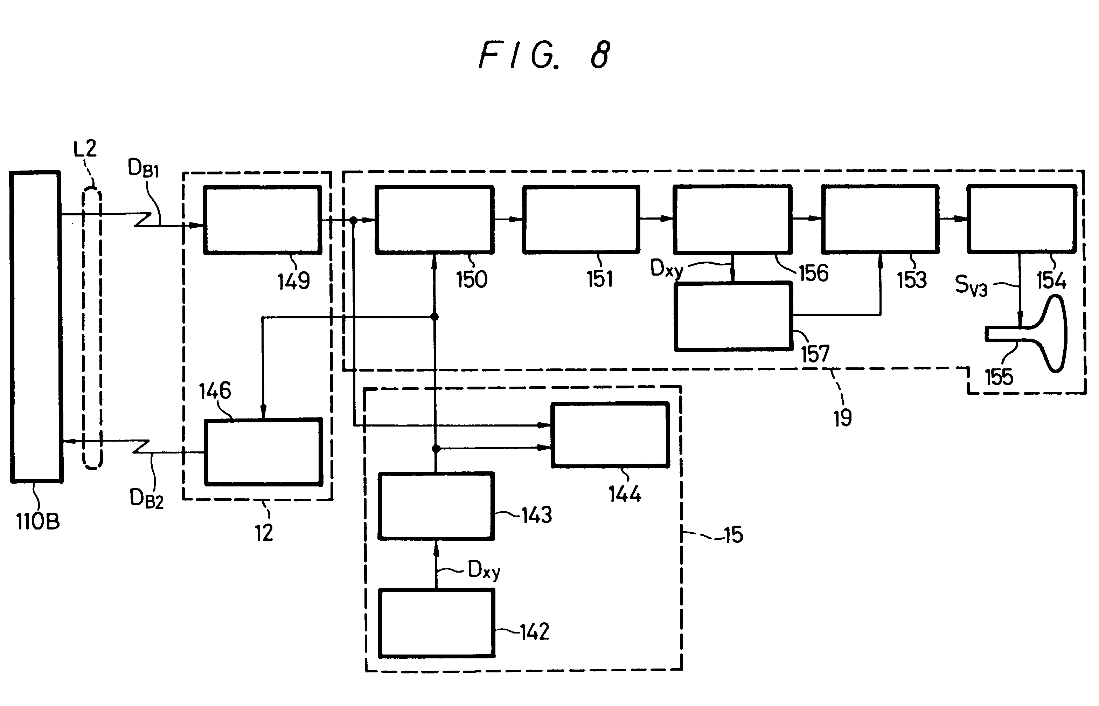

As shown in figure 6, the display apparatus 19 is alternately and sequentially supplied with the picture drawing data $D_{B1}$ and $D_{B2}$ outputted from the tablet input display apparatus 15 and the control apparatus 12, and supply them to its random access memory (RAM) circuit 51 to be stored therein.

Simultaneously, its central processing unit (CPU) 50 processes the picture drawing data $D_{B1}$ and $D_{B2}$ in accordance with the processing program stored in a read only memory (ROM) 52, whereby the display data stored in a video memory circuit 53 is renewed on the basis of the picture drawing data $D_{B1}$ and $D_{B2}$.

As shown in figure 6, a video memory display circuit 54 sequentially reads the display data of the video memory circuit 53 at the timing of the raster-scanning to form a video signal $S_{V3}$, and displays an image of the video signal $S_{V3}$ on a cathode ray tube (CRT) 55.

Therefore, the display apparatus 19 can display the line drawing inputted at the same time with the transmission object, thereby realising the telewriting function in which the operator can draw line drawings on a sheet of a paper at the same timing of the other party. Thus, the picture communication apparatus of the present invention can be utilised more effectively as compared with the prior art.

Further, the display apparatus 19 is adapted to display the video signal $S_{V3}$ in a superimposed fashion upon the video signal from the control apparatus 12 in response to the control signal from the control apparatus 12. Thus, the picture communication apparatus 10 can be utilised more effectively.

To be more concrete, in the display apparatus 19, a key signal is formed on the basis of the video signal $S_{V3}$ formed from the picture drawing data $D_{B1}$ and $D_{B2}$, and on the basis of the thus formed key signal, the line drawing can be displayed on the displayed image of the video signal derived from the control apparatus 12 in a superimposed fashion. Therefore, with the picture communication apparatus 10, a line drawing or the like can be superimposed upon the picked up picture. For example, while displaying the picked-up image such as a map or the like, line drawing such as a route or the like can be inputted to the displayed image. Further, instead of a map, a sheet of a drawing can be displayed, whereby errors on the drawing sheet can be pointed out or the drawing sheet can be rewritten. Thus, the picture communication apparatus of this invention can be utilised more effectively.

With the above mentioned arrangement, when the television signal receiving mode changeover key 27A or the video tape recorder reproducing mode changeover key 27B is turned ON, the picture communication apparatus 10 is set in the television receiver mode or the monitor apparatus mode, whereby the reproduced picture of the television broadcast or the video tape recorder is displayed on the display apparatus 19.

When the television communication mode operation key 27C is turned ON or when the handset 20 is ON-hooked, the picture communication apparatus 10 of the invention is connected to the picture communication apparatus 10B of the transmission object through the exclusive digital network line L2.

In this state, if the picture pick-up key 27D is turned ON, the document set by the operator is picked up by the document camera apparatus 17A, and the resultant video signal is transmitted together with the audio signal, and the video signal and the audio signal inputted through the exclusive digital network line L2 are outputted to the display apparatus 19, thus making it possible for the operator of the picture communication apparatus 10 to communicate with the operator of the picture communication apparatus 10B while discussing a document visible to both.

When the portrait camera key 27E is turned ON, instead of the video signal representing the document, the video signal representing the image of portrait is transmitted to the transmission object, whereby the operators can communicate with each other as though they met each other.

Further, when the still picture mode key 27F is turned ON, instead of the video signal, the still video signal of the operator or document is transmitted.

While, the cursor operation key 27G is turned ON, the mode of the picture communication apparatus is set in the telewriting mode, whereby the picture drawing data $D_{B2}$ inputted form the tablet input display apparatus 15 is transmitted to the transmission object, and is also outputted to the display apparatus 19 together with the picture drawing data $D_{B1}$ inputted from the transmission object. When the superimpose key 27H is turned ON, the video signal transmitted form the transmission object is displayed and the line drawing is displayed on the displayed image in a superimposed fashion.

There will now be explained an embodiment in which line drawing information is displayed on the liquid crystal display apparatus formed as one body with the tablet in the form of being superimposed upon the video signal from the control apparatus 12.

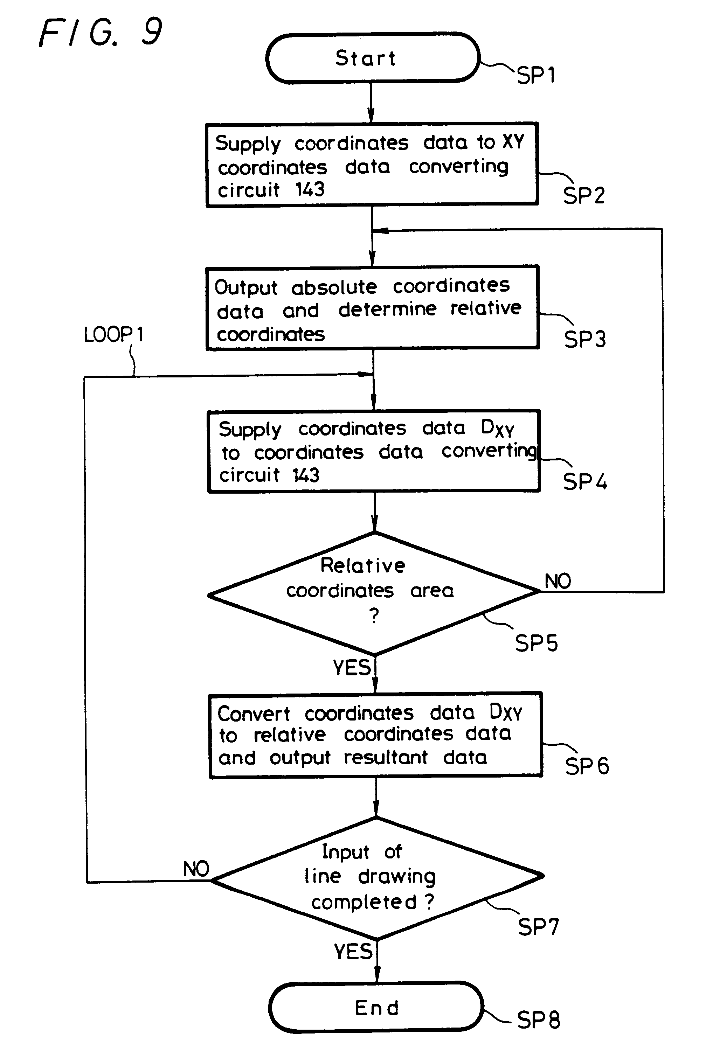

Referring to figure 7, the tablet input display apparatus 15 displays the video signal and the line drawing on the display screen of the liquid crystal display apparatus 46. Also, tablet 39 is provided with electrodes attached to the rear surface of the above described display screen.

More specifically, when the tablet input display apparatus 15 changes the operation mode in response to the mode changeover operation of the control apparatus 12. In the local mode and the television communication mode, the video signal $S_V$ from the control apparatus 12 is sequentially written in a frame memory circuit 48, and is sequentially read by the display circuit 45 via a selecting circuit 49, thereby forming the visual image of the above mentioned video signal $S_V$ on the display screen of the liquid crystal display apparatus 46.

In the telewriting mode, the tablet input display apparatus 15 forms the visual image in response to the picture drawing data $D_{B1}$ inputted thereto from the control apparatus 12 and the picture drawing data $D_{B2}$ formed by the tablet input display apparatus 15, and the display image is superimposed upon the display image of the video signal $S_V$.

The arrangement in which the display data stored in the video memory circuit 44 is renewed in relation to the coordinate data generated by the tablet 39 is the same as described in connection with figure 5. In figure 7, line parts corresponding to those of figure 5 are marked with the same references and therefore need not be described in detail. Accordingly, the line drawing data $D_{B2}$ of, for example, the straight line is sequentially outputted, and a display image of the scanning locus of the stylus 40 is formed on the basis of the line drawing data $D_{B2}$ of the straight line. As described above, the display circuit 45 sequentially reads the display data of the video memory circuit 44 at the timing of the raster-scanning via the selecting circuit 49, whereby a line drawing, expressed by the line drawing data $D_{B2}$, can be displayed on the display screen of the liquid crystal display apparatus 46. Consequently, in the hand-writing input mode, for example, the line drawing can be displayed following the scanning locus which is hand-written by the use of stylus 40. Therefore, the operator can operate the stylus 40 while viewing the displayed line drawing, and the operators can input data with ease as though they were inputting line drawing data by using something to write with.

In this embodiment, as shown in figure 7, a key signal forming circuit 55 forms a key signal on the basis of the line drawing data $D_{B2}$, and the contact of the selecting circuit 49 is changed-over by this key signal, whereby the line drawing portion is extracted from the video signal $S_V$, and the display data of the video memory circuit 44 is inserted into the extracted portion. Thus, the image of line drawing data is superimposed upon the displayed image of the video signal $S_V$.

Therefore, with the simplified arrangement in which the tablet input display apparatus 15 is provided in addition to the display apparatus 19, maps, drawings and so on, for example, are picked-up by the camera apparatus and the line drawing data can be inputted on the displayed picture and then transmitted by the simplified arrangement. thus, the picture communication apparatus can be utilised more effectively as compared with the prior art.

Further, the tablet input display apparatus 15 receives the picture drawing data $D_{B1}$ sent from the transmission object in addition to the picture drawing data $D_{B2}$, and processes the picture drawing data $D_{B1}$ similarly to the picture drawing data $D_{B2}$, thereby displaying the line drawing data expressed by the picture drawing data $D_{B1}$ together with the line drawing data of the picture drawing data $D_{B2}$. Thus, the tablet input display apparatus 15 can display the line drawing data and the same line drawing is simultaneously displayed in the transmission object.

Accordingly, it is possible to realise a telewriting function in which the operator can write line drawing on a sheet of paper and the same line drawing can be simultaneously displayed at the transmission object.

Consequently, the picture communication apparatus can be utilised more effectively as compared with the prior art picture communication apparatus.

In this embodiment, the tablet input display apparatus 15 is provided with input display means which displays line drawing data on the display screen and which displays picture drawing data on the input screen.

Referring to figure 8, a further embodiment will be explained in which coordinate data detected when the tablet is scanned by the stylus are converted to relative coordinate data and are then transmitted.

As shown in figure 8, an XY coordinate data detecting circuit 142 is adapted so that, when the line drawing is drawn by depressing the stylus 40 (see figure 4) on the liquid crystal display screen, it scans respective incremental areas in such a cycle as to enable incremental areas pressed by the stylus 40 to be detected. Thus, the line drawing data can be detected by the coordinate data of the incremental areas.

Accordingly, in this embodiment, the tablet 39, the stylus 40 (see figure 4) and the XY coordinate data detecting circuit 142 constitute coordinate data input means which inputs the coordinate data of the scanning locus formed by the stylus 40.

A coordinate data converting circuit 143 is formed of an operation processing circuit. When the input of the line drawing data is started in the line drawing data input mode, the coordinate data converting circuit 143 executes the routine of figure 9, thereby converting the coordinate data into picture drawing data $D_{B2}$ of predetermined format.

Referring to figure 9, following the start of the operation at start step SP1, the processing moves to step

$SP_2$ wherein the coordinate data $D_{XY}$ of the incremental area pressed by the stylus 40 (See figure 4) is supplied from the XY coordinate data detecting circuit 142 to the XY coordinate data converting circuit 143. Then, the processing proceeds to step SP3, in which an operation code, representing a point, is attached to the starting portion of the coordinate data $D_{XY}$, and is then outputted.

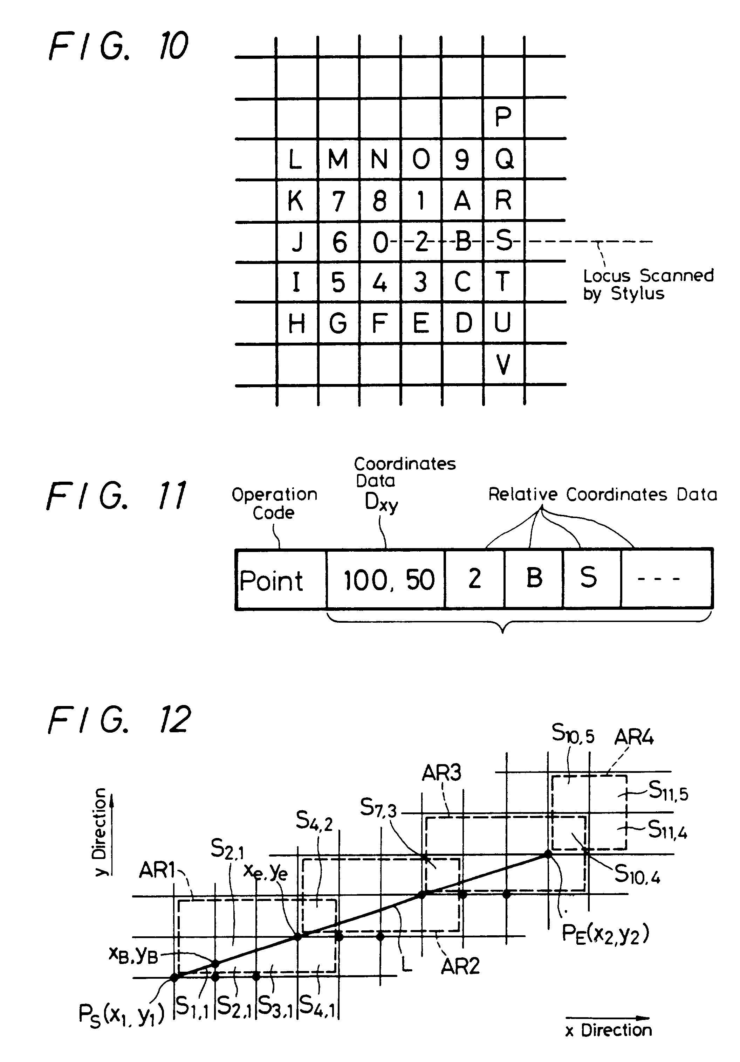

Further, as shown in figure 10, the incremental area pressed by the stylus 40, is taken as a picture drawing starting point, and the picture drawing starting point is assigned as a coordinate value 0. Furthermore, coordinates (they will hereinafter be referred to as relative coordinates) in hexadecimal notation, which increment by 1 each, are assigned to 15 incremental areas (these will hereinafter be referred to as relative coordinates areas) extended around the above described drawings starting point in the longitudinal and lateral directions so that they may spirally and sequentially formed around the picture drawing starting point.

Then, the proceeding of the coordinate data converting circuit 143 proceeds to step SP4, at which the coordinate data converting circuit 143 is supplied with the coordinate data $D_{XY}$ inputted from the XY coordinate data detecting circuit 142. The processing proceeds to step SP5, in which it is determined whether or not the incremental area expressed by the coordinate data $D_{XY}$ is the relative coordinates area.

In this case, if the stylus 40 is moved from the drawing starting point to the area in which the coordinate value 2 is assigned, then a NO is outputted at step SP5. Then the processing by the coordinate data converting circuit 143 proceeds to step SP6, wherein the coordinate data $D_{XY}$ is converted to the relative coordinate data based on the drawing starting point. Thus, the coordinate data $D_{XY}$ is converted to the relative coordinate data (in this case, the value thereof is 2) formed of 8 bits and then outputted.

The processing by the coordinate data converting circuit 143 proceeds to step SP7, wherein it is determined whether or not the input of the line drawing is completed. If a NO is outputted at step SP7, then the processing returns to step SP4, wherein the next coordinate data $D_{XY}$ is supplied to the coordinate data converting circuit 143.

Therefore, in the coordinate data converting circuit 143, if the processing loop LOOP1 formed of steps SP4, SP5, SP6, SP7 and SP4 is repeatedly executed, when the scanning of the stylus 40 is started from, for example, the drawing starting point to the lateral direction, relative coordinates of values 2, B, S, ... are sequentially converted to data of 8 bits and outputted.

Accordingly, as shown in figure 11, in the coordinate data converting circuit 143, the operation code representing the point for the hand written input of the line drawing is transmitted in the beginning. In the next step, the coordinate data $D_{XY}$ of the absolute data and the relative coordinate data based on the coordinate data

$D_{XY}$ are sequentially outputted. In this embodiment, the coordinate data $D_{XY}$ and the relative coordinate data constitute the operand portion, and the picture drawing data $D_{B1}$ and $D_{B2}$ are formed on the whole. Therefore, unlike the prior art, the operation codes, each representing a point, need not be added to the absolute coordinates of the plurality of points, so that it is possible to reduce the amount of picture drawing data used to express line drawing.

The coordinates of the succeeding point are expressed by relative coordinates based on the coordinate data $D_{XY}$ of the picture drawing starting point, whereby data amounts of 4 to 6 bytes necessary for transmitting coordinates of succeeding respective points in the prior art can be reduced to data amount of 8 bits, thereby reducing the data amount of line drawing data which are used to express the line drawing. Consequently, the processing speed of the display apparatus 19 can be increased, and the network line can be utilised more efficiently.

If the scanning by the stylus 40 goes outside the relative coordinates area, a NO is outputted at step SP5 and the processing by the coordinate data converting circuit 143 returns to step SP3. At step SP3, the picture drawing starting point is again set in the very small area from which the stylus 40 is displaced, and the relative coordinates region is set again to the picture drawing starting point thus set.

Thus, the drawing start point and the relative coordinates area are set again so that after the operation code and the coordinate data $D_{XY}$ are outputted again, the processing loop LOOP1 is repeated.

Therefore, the picture drawing data $D_{B2}$ is formed in units of relative coordinates regions and new picture drawing data $D_{B2}$ is outputted each time the relative coordinates region is set again.

When the stylus 40 is lifted from the liquid crystal display screen, detected result of the completion of the input is outputted from the XY coordinate data detecting circuit 142, whereby a YES is outputted in step SP7. Then, the processing proceeds to step SP8, at which the routine is ended.

As described above, the coordinate data converting circuit 143 can allow a hand written line drawing to be displayed on the display screen of the display apparatus 19 by outputting the picture drawing data $D_{B2}$ to the display apparatus 19, and also supplies the picture drawing data $D_{B2}$ to a picture drawing data transmitting circuit 146 of the control apparatus 12 via the display circuit 19. Thus, the operator can transmit operator's own line drawing to the transmission object while confirming the same.

Further, in the tablet input display apparatus 15, the picture drawing data $D_{B1}$ inputted from the transmission object is supplied through the display apparatus 19 to a liquid crystal display apparatus 144 together with the picture drawing data $D_{B2}$ sent from the coordinate data converting circuit 143, thereby displaying the line drawings, expressed by the picture drawing data $D_{B1}$ and $D_{B2}$, on the display screen located on the tablet 39.

More specifically, the liquid crystal display apparatus 144 sequentially changes, when the picture drawing data $D_{B1}$ or $D_{B2}$ is inputted thereto, the display condition of the liquid crystal display elements, forming the display screen, from the white display condition to the black display condition on the basis of the above mentioned picture drawing data $D_{B1}$ or $D_{B2}$, thereby forming the displayed image of the line drawing.

If the line drawing data $D_{B2}$ is inputted to the liquid crystal display apparatus 144 while the display apparatus 144 forms the displayed image of, for example, the picture drawing data $D_{B1}$ the picture drawing data $D_{B2}$ is temporarily stored in a memory circuit and then processes the picture drawing data $D_{B2}$ after the completion of processing the picture drawing data $D_{B1}$.

Therefore, according to this embodiment, the data amounts of the picture drawing data $D_{B1}$ and $D_{B2}$ can be reduced, thereby reducing the time required by the liquid crystal display apparatus 144 to process the picture drawing data $D_{B1}$ and $D_{B2}$. Thus, the tablet input display apparatus 15 can display the scanning locus of the stylus 40, following the scanning of the stylus 40.

In this kind of the tablet input display apparatus 15, the scanning locus of the stylus 40 is displayed with a time delay compared with the actual scanning of the stylus 40, so that as compared with a case where the user draws on paper, the operator may feel uneasy when operating the stylus 40. Accordingly, if the scanning locus of the stylus 40 is rapidly displayed as in this embodiment, then the operator can input the picture drawing data as if the operator drew with ordinary pens. Therefore, the picture communication apparatus 10 can be utilised more efficiently.

Further, in this embodiment, the picture drawing data $D_{B2}$ is formed in units of relative coordinates regions and the picture drawings data $D_{B2}$ and $D_{B2}$ are alternately processed. Thus, if the written picture is inputted together with the communication object, the display images of the picture drawing data $D_{B1}$ and $D_{B2}$ are alternately formed in a short processing time each time the stylus 40 is displaced from the relative coordinates regions. Therefore, the operator can input the picture drawing data as if the operator drew on a sheet of paper together with the communication object, and the picture communication apparatus 10 can be utilised more efficiently.

The display apparatus 19 is adapted to display the video signal which is derived from the control apparatus 12 in response to the mode switching operation of the control apparatus 12.

To be more concrete, in the local mode and in the television communication mode, the display apparatus 19 displays the video signal derived from the control apparatus 12. In the telewriting mode, on the other hand, the display apparatus 19 forms a display image in response to the picture drawing data $D_{B1}$ and $D_{B2}$ inputted thereto from the control apparatus 12 and the tablet input display apparatus 15, and displays the above display image. This display operation of the display apparatus 19 will be described hereinbelow with reference to figure 8.

As shown in figure 8, in the display apparatus 19, the picture drawing data $D_{B1}$, derived from a picture drawing data receiving circuit 149 is supplied to a picture drawing data control circuit 150 together with the picture drawing data $D_{B2}$.

The picture drawing data control circuit 150 outputs the picture drawing data $D_{B1}$ or $D_{B2}$, whichever comes first, to a picture drawing data demodulating circuit 151. Also, the picture drawing data control circuit 150 is adapted to temporarily store in a memory circuit (not shown) the next picture drawing data $D_{B1}$ or $D_{B2}$ until the processing of the picture drawing data $D_{B1}$ or $D_{B2}$ derived from the picture drawing data demodulating circuit 151 is complete.

The picture drawing data demodulating circuit 151 is formed of a calculation processing circuit, and is adapted to renew the display data stored in a video memory circuit 153 on the basis of the picture drawing data $D_{B1}$ and $D_{B2}$

Accordingly, in this embodiment, the data amount of the picture drawing data $D_{B1}$ or $D_{B2}$ can be reduced so that the data processing time of the picture drawing data demodulating circuit 151 can be reduced. Therefore, even if the picture drawing data $D_{B1}$ or $D_{B2}$ derived from the tablet input display apparatus 156 and the control apparatus 12 is processed in units of picture drawing data, it is possible to form the display data in a short period of time.

A video memory display circuit 154 sequentially reads the display data stored in the video memory circuit 153 at the timing of the raster-scanning to form the video signal, and displays this video signal on a cathode ray tube 155.

Accordingly, the processing time of the picture drawing data demodulating circuit 151 can be reduced, and the picture drawing data $D_{B2}$ can be formed in units of relative coordinates regions. Further, the picture drawing data $D_{B1}$ and $D_{B2}$ are processed in units of the picture drawing data. Accordingly, if the line drawing data is inputted together with the communication object, each time the stylus 40 is displaced from the relative coordinates region, the display images of the picture drawing data $D_{B1}$ and $D_{B2}$ are alternately formed in a short processing time similarly to the liquid crystal display apparatus 144.

Therefore, the operator can display the picture drawing data as if the operator drew on a sheet of paper together with the communication object. Thus, the picture communication apparatus 10 can be utilised more effectively.

Further, the display apparatus 19 displays the video signal derived from the video memory display circuit 154 in the video signal derived from the control apparatus 12 in response to the control signal from the control apparatus 12 in a superimposed fashion. Therefore, the picture communication apparatus 10 can be utilised more efficiently.

More specifically, the display apparatus 19 forms the key signal on the basis of the video signal generated from the picture drawing data $D_{B1}$ and $D_{B2}$, and displays the line drawing on the display screen in the form of being superimposed upon the video signal derived from the control apparatus 12 on the basis of the key signal. Therefore, the operator can pick up, for example, drawings, maps and the like and can input the line drawing on the displayed image, whereby the input operation of the line drawing can be improved as compared with the prior art.

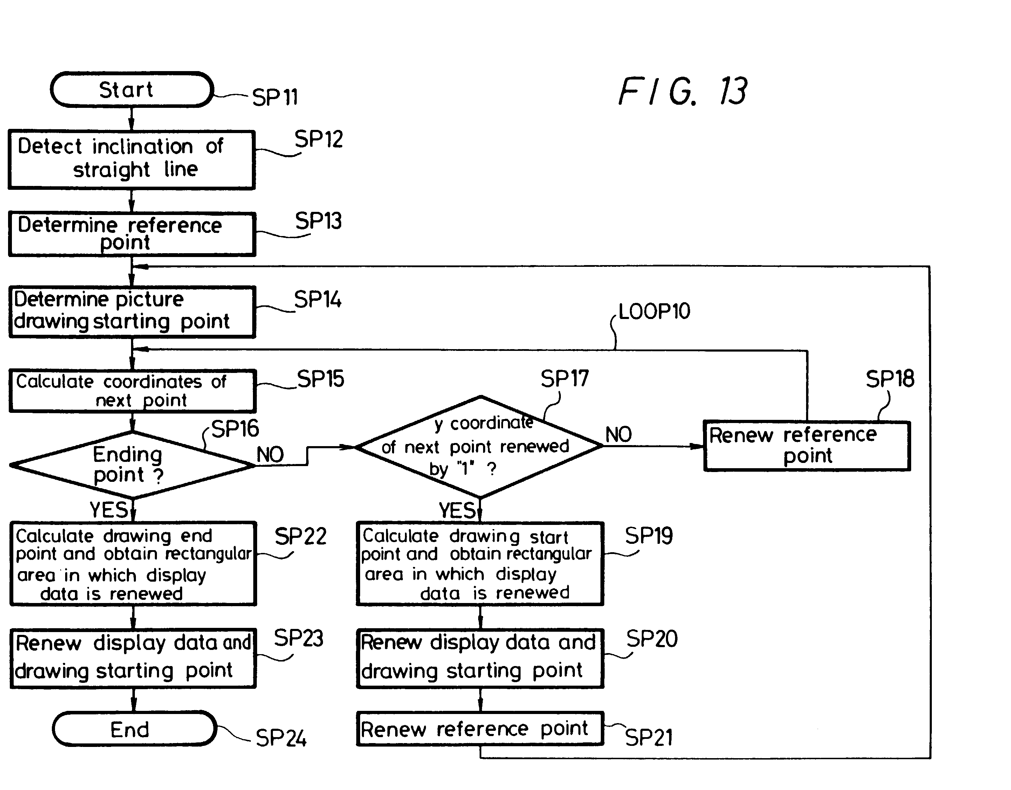

Referring to figures 12 and 13, a process will be explained in which the display data of the video memory is renewed on the basis of the detected coordinate data and a straight line L having a predetermined width (see figure 12) is displayed.

As shown in figure 13, following the start of operation in start step SP11, the processing proceeds to step SP1$_2$. In step SP12, coordinate data $x_1$, $y_1$ and $x_2$, $y_2$ starting and ending points $P_S$ and $P_E$ of the straight line L are obtained from, for example, the picture drawing data demodulating circuit 151 (see figure 8). Then, on the basis of the coordinate data $x_1$, $y_1$ and $x_2$, $y_2$ the calculation processing expressed in the following equation (1)

$$\frac{dy}{dx} = \frac{y_2 - y_1}{x_2 - x_1} \qquad (1)$$

is executed to detect the inclination of the straight line L.

Then, the processing proceeds to step SP13, whereat coordinate data $D_{XY}$ of corresponding pixel $S_{1,1}$ is obtained from the coordinate data $x_1$ and $y_1$ of the starting point $P_s$, and the coordinate data $D_{xy}$ is stored in a coordinate data memory circuit 157 (see figure 8). Then, coordinate data $x_A$ and $y_A$ of reference point, expressed as

$$x_A = x_1 \qquad (2)$$

$$y_A = y_1 \qquad (3)$$

are determined as the coordinate data $x_1$ and $y_1$ of the starting point $P_s$.

The processing of the coordinate data detecting circuit 156 (see figure 8) proceeds to step SP14. In step SP14, coordinate data $x_s$ and $y_s$ of a picture drawing starting point which are respectively expressed by the following equations (4) and (5) are updated to the coordinate data $x_A$ and $y_A$ of the reference point

$$x_s = x_A \qquad (4)$$

$$y_s = y_A \qquad (5)$$

Then, the adjacent pixel $S_{2,1}$ through which the straight line L passes is detected on the basis of the coordinate data $x_s$ and $y_s$ of the picture drawing starting point.

In that event, the coordinate data $y_s$ is updated while any decimal fraction thereof is omitted.

In step SP15, the coordinate data detecting circuit 156 executes the calculation expressed by the following equations (6) and (7).

$$x_B = x_A + 1 \qquad (6)$$

$$y_B = y_A + \frac{dy}{ds} \qquad (7)$$

Thus, coordinate data $x_B$, renewed in the x direction by one pixel amount, is obtained and the coordinate data $y_B$ in the y direction of the straight line L at that event is detected.

The routine proceeds to the next decision step SP16, whereat it is determined whether or not the following equation (8) is satisfied.

$$x_B = x_2 \qquad (8)$$

In other words, it is determined whether or not the coordinate data $x_A (=x_B)$ of the new reference point coincides with the coordinate data $x_2$ of the ending point.

In this case, a NO is outputted at step SP16, and then the processing of the coordinate data detecting circuit 156 proceeds to step SP17. In step SP17, it is determined whether or not the following equation (9) is satisfied.

$$y_B \geq y_A + 1 \qquad (9)$$

In this case, a NO is outputted at step SP17 because the straight line L passes the adjacent pixel $S_{2,1}$ in the x directions Then, the processing of the coordinate data detecting circuit 156 proceeds to step SP18.

In step SP18, the coordinate data detecting circuit 156 executes the calculation expressed by the following equation (10)

$$x_A = x_A + 1 \qquad (10)$$

In executing the step SP18, of the coordinate data of the reference point, the coordinate data $x_A$ in the x direction is renewed to the coordinate data $x_B$ of the next point obtained at step SP15. Then, the processing returns to step SP15, whereat coordinate data $x_B$, updated in the x direction by one pixel distance, is obtained on the basis of the updated reference point, and coordinate data $y_B$ in the y direction at that event is detected.

As described above, when a processing loop LOOP10 formed of steps SP15, SP16, SP17, SP18 and SP15 in this order is repeatedly performed, the coordinate data of the straight line L are sequentially updated in the x direction by one pixel amount each on the basis of the picture drawing starting point, and the coordinate data $y_B$ in the y direction of the straight line L and which corresponds to the updated coordinate data in the x direction can be detected.

If on the other hand x YES is outputted at decision step SP17 (this means that the coordinate data $y_B$ in the y direction is changed from the coordinate data of the picture drawing starting point by more than one pixel and means that the pixel, through which the straight line L passes, is changed from the pixels $S_{1,1}$, $S_{2,1}$, $S_{3,1}$ successive in the x direction is changed to a pixel $S_{4,2}$ which is upwardly moved in the y direction by one pixel amount), then the processing by the coordinate data detecting circuit 156 proceeds to step SP19. In step SP19, the reference point at that time is determined as the picture drawing ending point, and on the basis of the coordinate data $x_A$ and $y_A$ of the drawing ending point, there is executed the calculation expressed by the following equations (11) and (12)

$$x_C = x_A + dx_L \qquad (11)$$

$$y_C = y_A + dy_L \qquad (12)$$

According to the above mentioned calculations, a rectangular area AR1 is detected, in which the area is expanded in the x direction and in the y direction by the values $dc_L$ and $dy_L$ which are based on the pixels $S_{1,1}$, $S_{2,1}$ and $S_{3,1}$.

The values $dl_L$ and $dy_L$ are determined on the basis of control data and are used to form the straight line L whose width corresponds to 2 pixels.

The processing by the coordinate data detecting circuit 156 proceeds to step SP20, wherein on the basis of the coordinate data of the picture drawing starting point stored in the coordinate data memory circuit 157, the display data relating to pixels $S_{1,1}$, $S_{2,1}$, $S_{3,1}$, $S_{4,1}$, $S_{1,2}$, $S_{2,2}$, $S_{3,2}$ and $S_{4,2}$ in the rectangular area AR1, which are stored in the video memory circuit 153, is renewed from display data representing white to display data representing black. Then, the routine proceeds to step SP21.

As described above, in this embodiment, when the display data is renewed, the pixels which are continuous in the x direction are renewed at the same time.

In practice, in this kind of the video memory circuit 153, the video signal is formed by sequentially reading display data of adjacent pixels. Therefore, when the display data is renewed, if the pixels which are continuous in the x direction are renewed simultaneously, then a time necessary for forming the display image can be reduced as compared with a case where the display data is renewed in units of logic pixels.

Further, as described above, if the display data is of pixels which are continuous in the x direction are renewed at the same time the display data can be renewed efficiently, thereby reducing a time in which the display image is formed. In other words, when the display data is renewed in units of logic pixels as in the prior art, display data are renewed twice each for the pixels $S_{2,1}$, $S_{3,1}$, $S_{2,2}$ and $S_{3,2}$. Whereas, according to his embodiment of the invention, the display data is renewed just one time for the pixels $S_{2,1}$, $S_{3,1}$, $S_{2,2}$ and $S_{3,2}$. Therefore, the unnecessary renewals repeatedly performed to renew the display data in the prior art can be limited to the minimum, and the time necessary for forming the display image can be reduced more.

In step SP21, the coordinate data detecting circuit 156 updates the reference point by executing the calculation expressed by the following equations (13) and (14)

$$x_A = x_B \qquad (13)$$

$$y_A = y_B \qquad (14)$$

Then, the processing returns to step SP14, and the processing loop LOOP10 formed of steps SP15, SP16, SP17, SP18 and SP15 is repeated one more time.

Thus, when the processing loop LOOP10 is repeated, subsequent to the rectangular area AR1, rectangular areas AR2 and AR3 are sequentially detected, and display data are renewed for pixels $S_{4,2}$, ..., $S_{7,3}$ and $S_{7,3}$, ..., $S_{10,4}$.

If one the other hand it is determined that the coordinate data $x_B$ of the next point in the x direction coincides with the coordinate data $x_2$ of the ending point $P_E$ in the x direction (this means that the rectangular areas AR1, AR2 and AR3 are sequentially detected so that the next point reaches the ending point of the coordinate data of the straight line L) as represented by a YES at step SP16, then the processing by the coordinate data detecting circuit 156 proceeds to the next step SP22. In step SP22, coordinate data of the next point are determined as the coordinate data of the picture drawing ending point, and calculates the following equations (15) and (16)

$$x_C = x_A + dx_L \qquad (15)$$

$$y_C = y_A + dy_L \qquad (16)$$

Thus, a rectangular area AR4 is detected on the basis of data from the picture drawing starting point to the picture drawing ending point (in this embodiment, the picture drawing starting point and the picture drawing ending point are coincident with each other).

In the next step SP23, display data are renewed for the pixels $S_{10,4}$, $S_{11,4}$, $S_{10,5}$ and $S_{11,5}$ forming the rectangular area AR4, and the processing proceeds to end step SP24, whereat the routine is ended.

Accordingly, in the video memory circuit 153, the display images are sequentially formed in a short period of time in response to the picture drawing data $D_{B1}$ and $D_{B2}$ is displayed in the white background of the display screen of the cathode ray tube 155.

As described above, the time for forming a display image can be reduced so that, even when the picture drawing data $D_{B1}$ and $D_{B2}$ are alternately and sequentially taken in, thereby renewing the display data, the display data $D_{B1}$ and $D_{B2}$ can be processed in a short period of time. Therefore, the users can communicate with each other as though they were making, for example, a drawing on a sheet of paper. Thus, the picture communication apparatus 10 can be utilised more efficiently, and the exclusive digital network line L2 can be utilised more effectively.

As described above, according to this embodiment, the picture drawing data demodulating circuit 151, the coordinate data detecting circuit 156 and the coordinate data memory circuit 157 constitute pixel detecting means for detecting, on the basis of the picture drawing data $D_{B1}$ and $D_{B2}$, pixels, $S_{1,1}$, $S_{2,1}$, $S_{3,1}$, ..., $S_{10,4}$ through which the line drawing L, expressed by the picture drawing data $D_{B1}$ and $D_{B2}$ passes. Simultaneously, they constitute display data renewing means for sequentially renewing display data stored in the video memory circuit 153 on the basis of the pixels $S_{1,1}$, $S_{2,1}$, $S_{3,1}$, ..., $S_{10,4}$ and in units of pixels ($S_{1,1}$, $S_{2,1}$, $S_{3,1}$, $S_{4,1}$, $S_{1,2}$, $S_{2,2}$, $S_{3,2}$, $S_{4,2}$), ($S_{4,2}$, $S_{5,2}$, $S_{6,2}$, $S_{7,2}$, $S_{4,3}$, $S_{5,3}$ $S_{6,3}$ $S_{7,3}$) which are continuous in the x direction for consecutive pixels ($S_{1,1}$, $S_{2,1}$ $S_{3,1}$ $S_{4,1}$ $S_{1,2}$ $S_{2,2}$, $S_{3,2}$ $S_{4,2}$), ($S_{4,2}$, $S_{5,2}$, $S_{6,2}$, $S_{7,2}$ $S_{4,3}$ $S_{5,3}$, $S_{6,3}$, $S_{7,3}$).

Further, the video memory circuit 154 constructs a video memory control circuit which sequentially reads display data stored in the video memory circuit 153.

The display apparatus 19 displays the video signal $S_{V3}$ derived from the video memory display circuit 154 upon the video signal derived from the control apparatus 12 in response to the control signal from the control apparatus 12. Thus, the picture communication apparatus 10 of the present invention can be utilised more effectively.

More specifically, according to the display apparatus 19, the key signal is formed on the basis of the video signal $S_{V3}$ formed from the picture drawing data $D_{B1}$ and $D_{B2}$, and on the basis of the key signal, the line drawing can be superimposed upon the displayed image of the video signal derived from the control apparatus 12. Therefore, the operator can take a picture of, for example, drawing, map or the like and can input the line drawing on the display screen, whereby the input operation of the line drawing can be improved more as compared with the prior art.

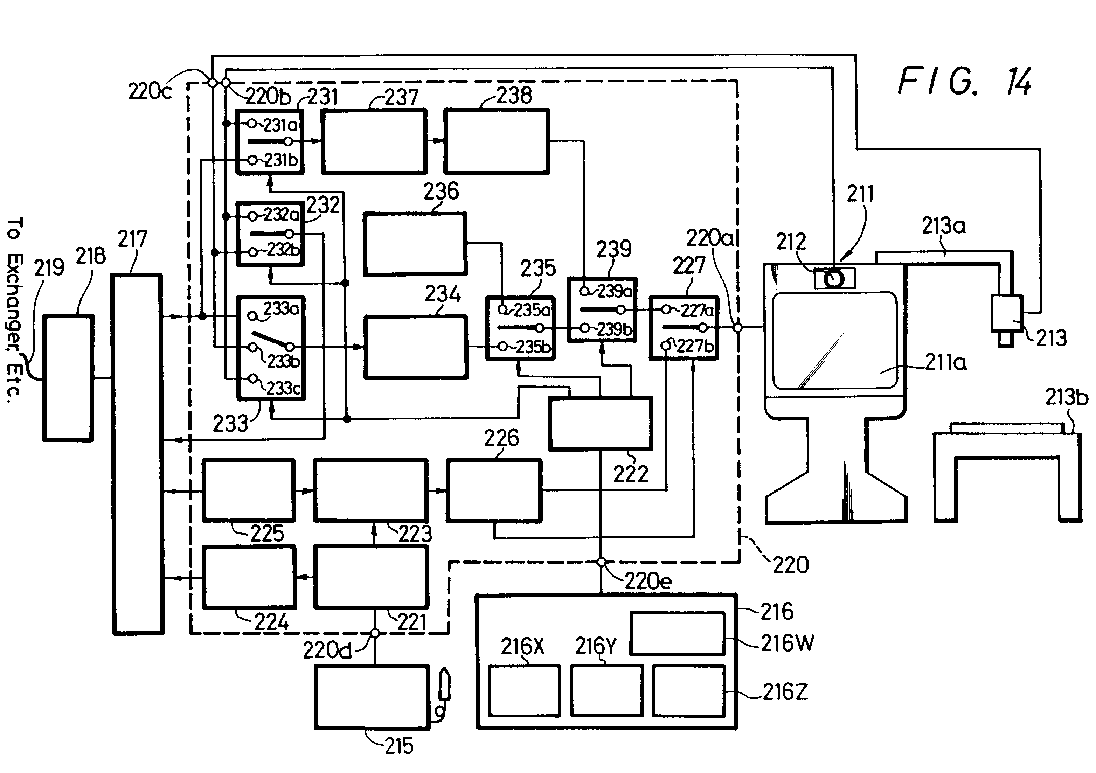

With reference to figure 14, how to set the display mode in the picture communication apparatus 10 having the above described tablet will be explained. Figure 14 is a block diagram showing an example of a television telephone apparatus.

As shown in figure 14, a television camera 212 for taking a picture of the operator (hereinafter be simply referred to as the portrait camera) is located above the central portion of a display screen 211a of a display monitor 211 such as a cathode ray tube (CRT) display monitor or the like. On the other hand, a television camera 213 for taking a picture of line drawing (hereinafter be simply referred to as a document television camera) is secured to the display monitor 211 via a support arm 213a attached to the top of the housing of the display monitor 211 or the like. A document table 213b is provided in an opposing relation to the document television camera 213. A picture of an original document on the document table 213b is taken by the document camera 213. The operator camera 212 is used to take a picture of the operator seated in front of the monitor display 211.

The monitor display 211 is supplied with a video signal from a video signal output terminal 220a of a controller 220. Picked-up output signals from the portrait television camera 212 and the document television camera 213 are supplied to signal input terminals 220b and 220C of the controller 220. A picture drawing tablet 215, provided as picture drawing input means, is connected through a picture drawing information input/output terminal 220d of the controller 220 to a tablet input/output control circuit 221. A keyboard 216, provided as key input means, is connected through a keyboard connection terminal 220e of the controller 220 to a key input/output control circuit 222. the keyboard 216 is provided with at least mode change-over keys such as a sub-picture key 216W, an operator key 216X, a document key 216Y and a blackboard 216Z.

Picture drawing information, derived from the tablet input/output control circuit 221 each time the tablet 215 is used to draw a picture or the like, is supplied to a picture drawing information control circuit 223, and is supplied through a data transmitting circuit 224 to a CODEC (coder-decoder) 217. The picture drawing information control circuit 223 is supplied with an incoming picture drawing information from a third party and derived from the CODEC 217 through a data receiving circuit 225. the picture information control circuit 223 is adapted to mix the incoming picture drawing information and the picture drawing information from the tablet input/output control circuit 221 and to supply a mixed output to a video RAM 226 provided as video signal memory means. Picture drawing information display signals (for example, three primary colour signals R, G and B) from the video RAM 226 are supplied to a fixed contact 227b of a superimpose high-speed changeover switch 227. The high-speed changeover switch 227 is changed in position by a switching control signal from, for example, the video RAM 226. This switching control signal can be provided by waveform-shaping the sum of, for example, the three primary colour signals R, G and B. when any one of the three primary colour signals R, G and B is not zero, the switching control signal goes to high level "H", connecting the changeover switch 227 to the fixed contact 227b. the changeover switch 227 is supplied at its fixed contact 227a with a video signal which indicates that a reduced picture (sub-picture) is displayed within an operator or document picture (main picture) if necessary, as will be described later. this video signal is formed of, for example, red, green and blue three primary colours signals R, G and B. while in the normal mode this video signal is supplied through the changeover switch 227 and the video signal output terminal 220a to the monitor display 211, when the picture drawing information exists (any one of the three primary colour signals R, G and B does not become zero), a display signal of picture drawing information read from the video RAM 226 is supplied through the changeover switch 227 and the terminal 220a to the monitor display 211. Thus, the content of the picture drawing information is superimposed upon the picture of the above described video signal.

A video signal supplied to the input terminal 220b from the television camera 212 is supplied to a fixed contact 231a of a changeover switch 231, a fixed contact 232a of a changeover switch 233. A video signal supplied from the television camera 213 through the input terminal 220c is supplied to a fixed contact 232b of the changeover switch 233. The incoming video signal from the CODEC 217 is supplied to the fixed contact 231b of the changeover switch 231 and the fixed contact 233a of the changeover switch 233, whereas the video signal from the changeover switch 232 is supplied to the CODEC 217. the video signal from the changeover switch 233 is supplied to a colour demodulating circuit 234, in which it is demodulated in colour to provide, for example, the red, green and blue three primary colour signals R, G and B. these three primary colour signals R, G and B are supplied to a fixed contact 235b of a changeover switch 235. The changeover switch 235 is supplied at its fixed contact 235a with a black picture signal from a black picture signal generating circuit 236. The black picture signal is used to display a background (blackboard) in a blackboard mode which will be described later. The video signal from the changeover switch 235 is supplied to a fixed contact 239b of a changeover switch 239. the video signal from the changeover switch 231 is supplied in colour to a colour demodulating circuit 237, in which it is demodulated to provide a colour video signal. This colour video signal is supplied to an image compressing circuit 238, in which it is compressed to provide a reduced-picture display signal. this reduced-picture display signal is supplied to the fixed contact 239a of the changeover switch 239. The changeover switch 239 derives a video signal of a so-called picture-in-picture type in which the video signal applied to the fixed contact 239a is inserted into the video signal supplied to the fixed contact 239b.

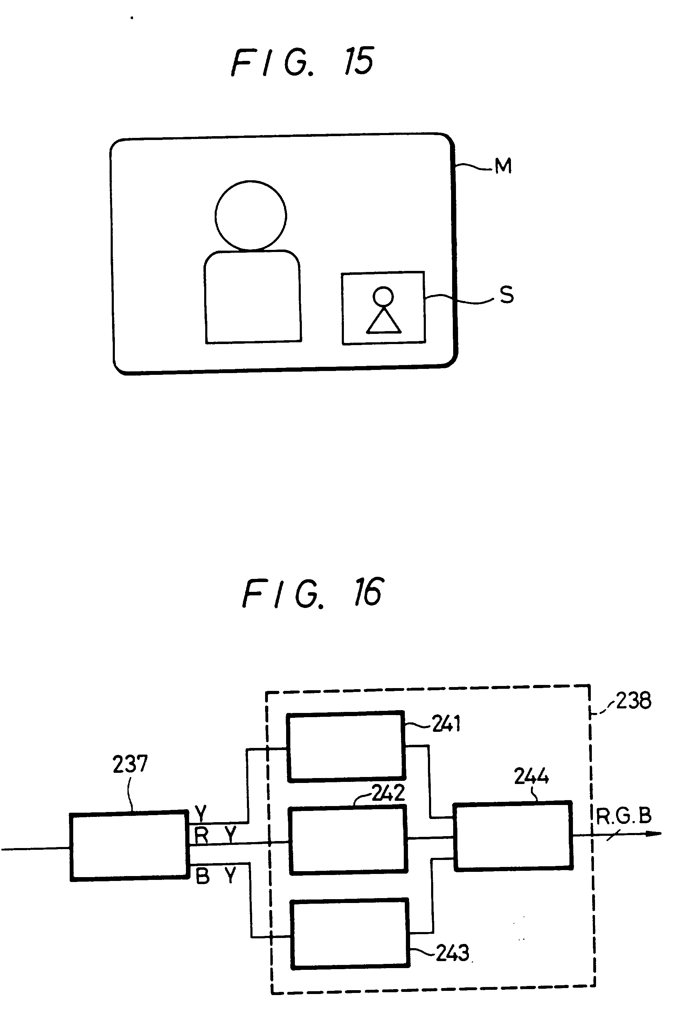

As shown in figure 15, the changeover switch 239 derives a video signal for displaying a picture in which a reduced-picture (sub-picture) $\underline{S}$ from the image compressing circuit 238 is inserted into one portion of a picture (main picture) $\underline{M}$ on which the video signal from the changeover switch 235 is displayed.

The video signal from the changeover switch 239 is supplied to the fixed contact 227a of the changeover switch 227, wherein the picture drawing information from the fixed contact 227b is superimposed upon this video signal, if necessary. the video signal from the changeover switch 227 is supplied through the video signal output terminal 220a to the display monitor 211. The changeover switches 231, 232, 233, 235 and 239 are respectively changed in position by the switching control signals from the key input/output control circuit 222. The CODEC 217 is connected through a MODEM (modulator-demodulator) 218 to a network line 219 such as a digital telephone network line and the like.

The above mentioned image compressing circuit 238 will be described more fully with reference to figure 16.

Referring to figure 16, in the image compressing circuit 238, a luminance signal Y and two colour difference signals R-Y, B-Y from the colour demodulating circuit 237 are respectively supplied to compressing circuits 241, 242 and 243, in which they are image-compressed by thinning them in the horizontal and vertical directions.

Then, the image-compressed signals are supplied to a matrix circuit 244, in which they are converted to the red, green and blue three primary colour signals R, G and B.

In the television telephone apparatus thus constituted, when the key 216X of the keyboard 216 is turned ON, the key input/output control circuit 222 controls the changeover switches 231, 232 and 233 so as to be connected to their fixed contacts 231a, 232a and 233a. Simultaneously, the changeover switch 235 is connected to the fixed contact 235b. In that event, the video signal from the television camera 212 is supplied through the changeover switch 231 to the colour demodulating circuit 237, and is also supplied through the changeover switch 232 to the CODED 217. The incoming video signal from the CODEC 217 is supplied through the changeover switch 233 to the colour demodulating circuit 234 and is thereby demodulated. The thus demodulated signal is supplied through the changeover switches 235 and 227 to the monitor display 211. Accordingly, the monitor display 211 displays the incoming video signal on the main picture screen $\underline{M}$ of figure 15 and also displays a visual image (operator's own visual image and portrait visual image) picked-up by the television camera 212 on the sub-picture screen $\underline{S}$ forming one portion of the picture. This portrait visual image is transmitted to and is displayed on the main picture screen of the monitor display of the other party.

When the key 216Y of the keyboard 216 is turned On, the key input/output control circuit 222 controls the changeover switches 231, 232 and 233 so as to be connected to the fixed contacts 231b, 232b and 233b. thus, the incoming video signal is supplied through the changeover switch 231 to the colour demodulating circuit 237. the video signal from the document television camera 213 is supplied through the changeover switch 232 to the CODED 217, and is also supplied through the changeover switch 233 to the colour demodulating circuit 234. Therefore, a visual image (document image) picked up by the television camera 213 is displayed on the monitor display 211 and the monitor display of the other party, whereas a portrait visual image of the other party is displayed on the sub-picture screen of the monitor display 211.

Further, when the television telephone apparatus is set in the document mode by the television telephone apparatus of the other party, for example, the changeover switches 231, 232 and 233 are all connected to the fixed contacts 231a, 232a and 233a whereby the incoming visual image (document image) is displayed on the main picture screen of the monitor display 211, and the portrait visual images are displayed on the sub-picture screens of the monitor display of the operator and of the monitor display of the other party, respectively. the incoming visual image of the document image is displayed on the main picture screen of the monitor display of the other party.

When the portrait or document display mode is selected, if the picture drawing information is inputted to the television telephone apparatus of the invention by the use of the tablet 215, the picture drawing information (ie, data signal) is supplied to the CODED 217 form the tablet input/output control circuit 221 through the data transmitting circuit 224. This picture drawing information is mixed to the incoming picture drawing information by the picture drawing information control circuit 223, and is written in the video RAM 226. The video signal read from the video RAM 226 is superimposed upon the above-mentioned video signal by the changeover switch 227, and is supplied to the monitor display 211. Therefore, the displayed document can be marked with underlines, check marks or the like.

The blackboard key 216Z of the keyboard 216 must be turned ON in order to display a video signal representing the portrait or only a hand written memorandum or the like independently of the document.

More specifically, when the blackboard mode is selected by turning the blackboard key 216Z ON, the key input/output control circuit 222 controls the changeover switch 235 so as to be connected to the fixed contact 235a, whereby instead of the above mentioned video signal, the black picture signal from the black picture signal generating circuit 236 is supplied to the fixed contact 227a of the changeover switch 227. Simultaneously, the key input/output control circuit 222 controls the changeover switch 239 such that the changeover switch 239 is always connected to the fixed contact 227b to thereby stop the display of sub-picture. Consequently, the background is displayed only in black, which corresponds to the blackboard, whereby only the picture drawing information is displayed on the monitor display 211. The colour of the background is not limited to black and can be freely selected so long as the selected colour is distinguishable from the picture drawing information.

When the sub-picture mode is selected by turning the sub-picture key 216W ON while the blackboard mode is being selected, the key input/output control circuit 222 controls the changeover switch 231 so as to be connected to the fixed contact 231a. Simultaneously, the key input/output control circuit 222 controls the changeover switch 239 so that the changeover switch 239 is changed in position to display the sub-picture in the picture-in-picture fashion. Thus, a visual image based on the incoming video signal is compressed and displayed on the monitor display 211 at its one portion of the main picture screen on which the black background is displayed in the blackboard mode.

According to the television telephone apparatus as described above, in the portrait display mode or the document display mode, the picture drawing information inputted by the tablet 215 is overwritten in the displayed image, whereby the document image displayed, for example on the monitor display 211 can be marked with underlines, check marks and the line. In addition, when only a hand written memorandum or the like is displayed, the background is displayed only in a single colour or black corresponding to a blackboard, whereby the user can see only the picture drawing content clearly. further, when the sub-picture mode is selected by turning the sub-picture key 216W ON while only the picture drawing information is displayed in the blackboard mode, the portrait of the other party or the like can be displayed in compressed state on one portion of the picture screen in a picture-in-picture fashion. Thus, it becomes possible to explain the line drawing or the like while seeing the countenance of the other party.

While the sub-picture key 216W becomes effective only in the blackboard mode as described above, it is needless to say that the sub-picture can be displayed or erased by turning the sub-picture key 216W ON or OFF in the portrait display mode or the document display mode. Furthermore, in the television telephone apparatus which is now commercially available on the market, for example, a still picture mode selecting key is additionally provided, whereby a still picture of portrait or document may be transmitted with high resolution when the still picture mode is selected by the still picture mode selecting key.

## Claims

1. A two-way communication system including first and second communication terminals (10;110), and picture communication means at each terminal for providing users with visual images of each other, said picture communication means comprising:

a) camera means (17;212) for generating video signals to be transmitted;
b) display means (19;211) for displaying the visual images;
c) control means (12;220) for controlling transmission and reception of said video signals; and
d) line drawing input means (15;215) connected to said control means for generating a line signal representing a line drawing for transmitting from said control means;

wherein said line drawing input means includes tablet means (39) on which a user can draw lines, coordinate data detecting means (39A; 142) for detecting coordinates corresponding to drawn lines, and output means for outputting coordinate data to said control means; characterised
by further comprising means at each terminal for connection to and communication via a two-way telephone service; in that
said line drawing input means includes coordinates converting means (143) for converting absolute coordinate data, detected by said coordinate data detecting means, to relative coordinate data for supply to said output means; in that
said output means comprises parallel-to-serial converting means (43) for outputting serial coordinate data to said control means; and in that
said line signal is transmitted from said control signal with said video signal.

2. A two-way communication system according to claim 1, wherein said line drawing input means includes auxiliary display means composed of liquid crystal devices (46) and formed in the same body as said tablet means, and video memory means (44) for storing video data supplied to said auxiliary display means, wherein said converting means, supplied with said coordinate data, converts the same into video data to be written in said video memory means.

3. A two-way communication system according to claim 2, wherein said line drawing input means includes superimposing means (42) for superimposing the video data stored in said video memory means (44) onto said video signal generated by the camera means (17) of one of said first and second communication terminals.

4. A two-way communication system according to claim 2 or 3, wherein said coordinate data are X and Y coordinates and said converting means includes means for renewing the video data each time one of said X and Y coordinate data changes its level.

5. A two-way communication system according to any one of the preceding claims, wherein said control means includes mode selecting means (27) for selecting one of a first display mode for displaying said line drawing only on said display means (19) and a second display mode for displaying a superimposed image of said line drawing and the image represented by said video signals on said display means.

6. A two-way communication system according to claim 5, wherein said mode selecting means (27) is capable of selecting a third display mode for displaying said line drawing on a main display area of said display means and the image represented by said video signals on a sub display area of said display means.

## Patentansprüche

1. Zweiwege-Kommunikationsvorrichtung aufweisend erste und zweite Kommunikations-Endgeräte (10; 110) und eine Bildkommunikationseinrichtung an jedem Endgerät, um Benutzern visuelle Bilder voneinander zu liefern, wobei die Bildkommunikationseinrichtung aufweist:

a) eine Kameraeinrichtung (17; 212) zur Erzeugung von zu übertragenden Videosignalen,

b) eine Anzeigeeinrichtung (19; 211) zur Anzeige der visuellen Bilder;

c) eine Steuereinrichtung (12; 220) zur Steuerung der Übertragung und des Empfangs der Videosignale; und

d) eine mit der Steuereinrichtung verbundene Linienzeichnungs-Eingabeeinrichtung (15; 215) zur Erzeugung eines eine Linienzeichnung darstellendes Liniensignales zur Übertragung von der Steuereinrichtung;

wobei die Linienzeichnungs-Eingabeeinrichtung eine Flachbretteinrichtung (39), auf der ein Benutzer Linien zeichnen kann, eine Koordinatendaten-Erfassungseinrichtung (39A; 142) zur Erfassung von den gezeichneten Linien entsprechenden Koordinaten, und eine Ausgabeeinrichtung zur Ausgabe von Koordinatendaten an die Steuereinrichtung aufweist; **dadurch gekennzeichnet**, daß die Vorrichtung ferner an jedem Endgerät eine Einrichtung zur Verbindung und zur Kommunikation über einen Zweiwege-Telephondienst aufweist;

die Linienzeichnungs-Eingabeeinrichtung eine Koordinatenumwandlungseinrichtung (143) zur Umwandlung der durch die Koordinatendaten-Erfassungseinrichtung erfaßten Absolutkoordinaten in Relativkoordinaten aufweist, um diese der Ausgabeeinrichtung zu liefern;

die Ausgabeeinrichtung eine Parallel-in-Seriell-Wandlereinrichtung (43) zur Ausgabe von seriellen Koordinatendaten an die Steuereinrichtung aufweist; und daß

das Liniensignal von der Steuereinrichtung mit dem Videosignal übertragen wird.

2. Zweiwege-Kommunikationsvorrichtung gemäß Anspruch 1,
wobei die Linienzeichnungs-Eingabeeinrichtung eine Hilfsanzeigeeinrichtung bestehend aus Flüssigkristall-Einrichtungen (42) aufweist und welche im gleichen Gehäuse wie die Flachbretteinrichtung ausgebildet ist, und aufweisend eine Videospeichereinrichtung (44) zur Speicherung von der Hilfsanzeigeeinrichtung zugeführten Videodaten, wobei die mit den Koordinatendaten versorgte Umwandlungseinrichtung dieselben in Videodaten umwandelt, die in die Videospeichereinrichtung geschrieben werden.

3. Zweiwege-Kommunikationsvorrichtung gemäß Anspruch 1,
wobei die Linienzeichnungs-Eingabeeinrichtung eine Überlagerungseinrichtung (42) zur Überlagerung der in der Videospeichereinrichtung (44) gespeicherten Videodaten über das durch die Kameraeinrichtung (17) einer von dem ersten und zweiten Kommunikationsendgerät erzeugte Videosignal aufweist.

4. Zweiwege-Kommunikationsvorrichtung gemäß Anspruch 2 oder 3,
wobei die Koordinatendaten X- oder Y-Koordinaten sind und die Umwandlungseinrichtung Mittel aufweist zur Aktualisierung der Videodaten immer dann, wenn eine von den X- oder Y-Koordinaten seinen Wert ändert.

5. Zweiwege-Kommunikationsvorrichtung gemäß einem der vorangegangenen Ansprüche,
wobei die Steuereinrichtung eine Moduswahleinrichtung (27) zur Auswahl eines von einem ersten Anzeigemodus zur Anzeige der Linienzeichnung nur auf der Anzeigeeinrichtung (19) und einem zweiten Anzeigemodus zur Anzeige eines überlagerten Bildes der Linienzeichnung und des durch die Videosignale repräsentierten Bildes auf der Anzeigeeinrichtung aufweist.

6. Zweiwege-Kommunikationsvorrichtung gemäß Anspruch 5,
wobei die Modusauswahleinrichtung (27) ausgebildet ist zur Auswahl eines dritten Anzeigemodus zur Anzeige der Linienzeichnung auf einem Hauptanzeigebereich der Anzeigeeinrichtung und des durch die Videosignale repräsentierten Bildes auf einem Unteranzeigebereich der Anzeigeeinrichtung.

**Revendications**

1. Système de communication bidirectionnelle incluant des premier et second terminaux de communication (10; 110) et un moyen de communication d'image au niveau de chaque terminal pour fournir à des utilisateurs des images visuelles de chacun d'entre eux, ledit moyen de communication d'image comprenant :

a) un moyen de caméra (17 ; 212) pour générer des signaux vidéo à émettre ;
b) un moyen d'affichage (19; 211) pour afficher les images visuelles ;
c) un moyen de commande (12 ; 220) pour commander une émission et une réception desdits signaux vidéo ; et

d) un moyen d'entrée de tracé de ligne (15; 215) connecté audit moyen de commande pour générer un signal de ligne représentant un tracé de ligne en vue d'une émission à partir dudit moyen de commande,

dans lequel ledit moyen d'entrée de tracé de ligne inclut un moyen de tablette (39) sur lequel un utilisateur peut tracer des lignes, un moyen de détection de données de coordonnées (39A ; 142) pour détecter des coordonnées correspondant à des lignes tracées et un moyen de sortie pour générer en sortie des données de coordonnées sur ledit moyen de commande,

caractérisé en ce qu'il comprend en outre :

un moyen situé au niveau de chaque terminal pour une connexion à et une communication via un service téléphonique bidirectionnel ; en ce que

ledit moyen d'entrée de tracé de ligne inclut un moyen de conversion de coordonnées (143) pour convertir des données de coordonnées absolues, détectées par ledit moyen de détection de données de coordonnées, en données de coordonnées relatives en vue d'une application audit moyen de sortie ; en ce que

ledit moyen de sortie comprend un moyen de conversion parallèle/série (43) pour générer en sortie des données de coordonnées série sur ledit moyen de commande ; et en ce que

ledit signal de ligne est émis à partir dudit signal de commande avec ledit signal vidéo.

2. Système de communication bidirectionnelle selon la revendication 1, dans lequel ledit moyen d'entrée de tracé de ligne inclut un moyen d'affichage auxiliaire composé de dispositifs à cristaux liquides (46) et formé dans le même corps que ledit moyen de tablette, et un moyen de mémoire vidéo (44) pour stocker des données vidéo appliquées audit moyen d'affichage auxiliaire, dans lequel ledit moyen de conversion, qui se voit appliquer lesdites données de coordonnées, les convertit en données vidéo à écrire dans ledit moyen de mémoire vidéo.

3. Système de communication bidirectionnelle selon la revendication 2, dans lequel ledit moyen d'entrée de tracé de ligne inclut un moyen de superposition (42) pour superposer les données vidéo stockées dans ledit moyen de mémoire vidéo (44) sur ledit signal vidéo généré par le moyen de caméra (17) de l'un desdits premier et second terminaux de communication.

4. Système de communication bidirectionnelle selon la revendication 2 ou 3, dans lequel lesdites données de coordonnées sont constituées par des coordonnées X et Y et dans lequel ledit moyen de conversion inclut un moyen pour renouveler les données vidéo chaque fois que l'une desdites données de coordonnées X et Y voit son niveau changer.

5. Système de communication bidirectionnelle selon l'une quelconque des revendications précédentes, dans lequel ledit moyen de commande inclut un moyen de sélection de mode (27) pour sélectionner un mode d'affichage pris parmi un premier mode d'affichage pour afficher ledit tracé de ligne seulement sur ledit moyen d'affichage (19) et un second mode d'affichage pour afficher une image superposée dudit tracé de ligne et de l'image représentée par lesdits signaux vidéo sur ledit moyen d'affichage.

6. Système de communication bidirectionnelle selon la revendication 5, dans lequel ledit moyen de sélection de mode (27) permet de sélectionner un troisième mode d'affichage pour afficher ledit tracé de ligne sur une zone d'affichage principale dudit moyen d'affichage et l'image représentée par lesdits signaux vidéo sur une sous-zone d'affichage dudit moyen d'affichage.

EP 0 379 354 B1

*F I G. 1*

*F I G. 2*

FIG. 3

FIG. 4

EP 0 379 354 B1

FIG. 5

$D_{B1}, D_{B2}$

L2

12

19

43

42

39A

39

$D_{XY}$

41

44

45

46

15

FIG. 6

52

50

51

53

54

55

19

$D_{B1}, D_{B2}$

$S_{V3}$

EP 0 379 354 B1

*FIG. 7*

EP 0 379 354 B1

FIG. 8

# FIG. 9

```
            ┌─────────────────┐
            │     Start        │─── SP1
            └─────────────────┘
                     │
                     ▼
   ┌───────────────────────────────┐
   │ Supply coordinates data to XY │
   │ coordinates data converting   │─── SP2
   │ circuit 143                   │
   └───────────────────────────────┘
                     │
                     ▼
   ┌───────────────────────────────┐
   │ Output absolute coordinates   │
   │ data and determine relative   │─── SP3
   │ coordinates                   │
   └───────────────────────────────┘
   LOOP1             │
                     ▼
   ┌───────────────────────────────┐
   │ Supply coordinates data $D_{XY}$ │
   │ to coordinates data converting │─── SP4
   │ circuit 143                   │
   └───────────────────────────────┘
                     │
                     ▼
                  ◇ Relative
                  coordinates area  ──NO──
                     ?              SP5
                     │
                   YES
                     ▼
   ┌───────────────────────────────┐
   │ Convert coordinates data $D_{XY}$ │
   │ to relative coordinates data  │─── SP6
   │ and output resultant data     │
   └───────────────────────────────┘
                     │
                     ▼
          ◇ Input of
     NO──  line drawing
            completed ?  SP7
                     │
                   YES
                     ▼
            ┌─────────────────┐
            │      End         │─── SP8
            └─────────────────┘
```

*F I G.  10*

Locus Scanned
by Stylus

*F I G.  11*

*F I G.  12*

F I G. 13

Start — SP11

Detect inclination of straight line — SP12

Determine reference point — SP13

Determine picture drawing starting point — SP14

Calculate coordinates of next point — SP15

Ending point? — SP16
NO / YES

LOOP10

SP17 — y coordinate of next point renewed by "1" ?
NO / YES

SP18 — Renew reference point

SP19 — Calculate drawing start point and obtain rectangular area in which display data is renewed

SP20 — Renew display data and drawing starting point

SP21 — Renew reference point

SP22 — Calculate drawing end point and obtain rectangular area in which display data is renewed

SP23 — Renew display data and drawing starting point

SP24 — End

FIG. 14

.

# F I G. 15

# F I G. 16